# FASCICULE DE BREVET EUROPEEN

(11) **EP 0 783 381 B1**
(45) Date de publication et mention de la délivrance du brevet: **28.04.1999**
(21) Numéro de dépôt: 95931257.0
(22) Date de dépôt: 18.09.1995
(51) Int. Cl.: B07B 13/00

(54) **DISPOSITIF POUR LE TRI MANUEL DE DECHETS**
VORRICHTUNG ZUM MANUELLEN SORTIEREN VON ABFÄLLEN
DEVICE FOR MANUALLY SORTING WASTE

(30) Priorité: 19.09.1994 FR 9411288
(43) Date de publication de la demande: 16.07.1997
(73) Titulaire: AKROS, 73000 Chambéry (FR)
(72) Inventeur: ALLAGNAT, Bernard, F-73190 Apremont (FR); BODINIER, Marc, F-73000 Chambéry (FR)
(74) Mandataire: Richebourg, Michel François
(86) Numéro de dépôt international: FR9501193
(87) Numéro de publication internationale: WO9609127

(56) Documents cités:
- EP-A- 0 123 825
- DE-A- 3 410 901
- GB-A- 566 183

## Description

### DOMAINE TECHNIQUE DE L'INVENTION

La présente invention concerne le tri de produits solides, par exemple des déchets ménagers ou des déchets industriels banals, permettant de sélectionner les déchets valorisables.

Les déchets à trier peuvent comprendre toutes formes d' éléments en papier, en matière plastique, en verre, en métal, en bois ou tout autre matériau. Le tri permet de séparer les éléments de déchets en fonction de leur nature ou de leur constitution, de façon à permettre un traitement ultérieur sélectif.

On connaît déjà des procédés et des installations de tri de déchets, par exemple le procédé et le dispositif décrits dans le document US-A-5 249 690. Dans ce document, une installation de tri de déchets comprend au moins un convoyeur primaire généralement linéaire, associé à un convoyeur de retour également linéaire pour former une boucle fermée, et avec des convoyeurs secondaires et des convoyeurs auxiliaires raccordés au convoyeur primaire par des postes de tri manuel. Une telle installation est particulièrement complexe, nécessitant une multiplicité de convoyeurs, et occupe une grande place, répartie sur plusieurs étages d'un bâtiment, et son coût est élevé.

On connaît également, par les documents GB-A-566 183 ou EP-A-0 123 825, des dispositifs pour le tri manuel de déchets dans lesquels le système de présentation est un plateau tournant en forme de couronne circulaire horizontale, avec un volet oblique fixe déviant radialement les déchets en bout de zone de tri. La largeur de la couronne circulaire est limitée, pour permettre à l'opérateur d'accéder aux déchets qu'elle porte.

Le document DE-A-34 10 901 décrit une table rotative de tri automatique de pièces, avec des volets à deux positions éjectant sélectivement les pièces vers des réceptacles respectifs en périphérie. Il n'est pas prévu d'accès aux pièces par des opérateurs de tri manuel.

### EXPOSE DE L'INVENTION

Le problème proposé par la présente invention est de concevoir un nouveau dispositif de tri manuel, et un procédé d'utilisation associé, permettant d'assurer une bonne accessibilité des déchets pour améliorer la qualité du tri manuel d'un ou plusieurs opérateurs, et de réduire sensiblement l'encombrement de l'installation de tri, tout en permettant à la fois de recevoir le contenu d'une benne de camion.

Un autre objet de l'invention est d'augmenter la souplesse d'utilisation du dispositif de tri, en permettant d'utiliser sur un même dispositif un nombre variable d' opérateurs non spécialisés dans le tri d'une catégorie unique d'objets.

Un autre objet de l'invention est d'améliorer la qualité du tri, en facilitant la réalisation d'un tri exhaustif des parties valorisables contenues dans les déchets à trier.

Pour atteindre ces objets ainsi que d'autres, un dispositif pour le tri manuel de déchets comprend au moins un poste d'opérateur disposé en périphérie d'un système de présentation en boucle fermée, avec des moyens pour amener les déchets à trier sur le système de présentation. En outre, selon l'invention :
- le système de présentation est un plateau tournant en forme de couronne généralement circulaire et horizontale, limité par un bord extérieur et par un bord intérieur, et entraîné en rotation selon un axe vertical coaxial par des moyens moteurs,
- le bord intérieur entoure un espace central,
- des moyens de réception et d'évacuation de déchets sont disposés au voisinage de l'un au moins des bords intérieur ou extérieur,
- des moyens pousseurs réglables permettent de repousser radialement à volonté et de façon réglable les déchets sur le plateau tournant au moins en direction du bord extérieur, pour les rapprocher à volonté du bord extérieur et les rendre accessibles par l'opérateur occupant le poste d'opérateur,
- les moyens pousseurs réglables permettent de repousser radialement et progressivement à volonté les déchets sur le plateau tournant jusqu'à l'un au moins des bords intérieur ou extérieur, et de les déverser dans les moyens de réception et d'évacuation de déchets,
- le poste d'opérateur comprend au moins une structure d'accueil et d'évacuation de déchets sélectionnés conformée et disposée pour recevoir et évacuer les déchets sélectionnés par l'opérateur occupant le poste d'opérateur.

Grâce à la présence des moyens pousseurs, le plateau tournant peut avoir une largeur conséquente, plus grande que celle permettant à un opérateur d'avoir accès à toute la zone de déchets qui passe devant lui sur le plateau tournant. Les déchets peuvent en effet être progressivement repoussés radialement vers le bord extérieur du plateau tournant par les moyens pousseurs, pour être amenés à une distance les rendant accessibles par l'opérateur.

Selon un mode de réalisation avantageux, les moyens pousseurs réglables comprennent au moins un premier volet orientable, placé en une zone fixe au-dessus du plateau tournant, et adapté pour racler les déchets portés par le plateau tournant et pour les dévier radialement au moins en direction du bord extérieur, avec des moyens d'actionnement du premier volet orientable pour commander son orientation et la déviation des déchets qui en résulte, éventuellement jusqu'à leur déversement sélectif à la périphérie du plateau dans des moyens de réception et d'évacuation de déchets.

Selon également un mode de réalisation avantageux, les moyens pousseurs réglables comprennent éventuellement au moins un second volet orientable, placé en une zone fixe au-dessus du plateau tournant, et adapté pour racler les déchets portés par le plateau tournant et pour les dévier radialement jusqu'au bord intérieur, avec des moyens d'actionnement du second volet orientable pour commander son orientation et la déviation des déchets qui en résulte. Le second volet orientable permet alors de déverser sélectivement les déchets dans des moyens de réception et d'évacuation de déchets placés dans l'espace central.

Une possibilité avantageuse consiste à regrouper le premier volet et le second volet en un seul et même volet orientable.

Dans un procédé de tri de déchets selon la présente invention, les déchets sont amenés sur un système de présentation en boucle fermée pour passer à proximité d'au moins un poste d'opérateur occupé par un opérateur effectuant un tri manuel. Le système de présentation est un plateau tournant en forme de couronne généralement circulaire et horizontale. Lors d'une étape initiale de tri, les déchets présents sur le plateau tournant sont progressivement repoussés vers la périphérie du plateau tournant pour les rapprocher de l'opérateur qui retire du plateau tournant les déchets sélectionnés. Lors d'une étape finale, les déchets non sélectionnés sont repoussés soit vers le centre pour se déverser dans l'espace central du plateau tournant par lequel ils sont ensuite évacués, soit vers la périphérie du plateau tournant vers une goulotte de déversement par laquelle ils sont ensuite évacués.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue schématique d'ensemble en perspective d'un dispositif de tri de déchets selon un premier mode de réalisation de la présente invention ;
- la figure 2 est une vue latérale en coupe du dispositif de tri de la figure 1 ;
- la figure 3 est une vue de dessus du dispositif de tri de la figure 1 ;
- la figure 4 illustre en perspective le dispositif de tri de la figure 1 en position volet orientable fermé pour le chargement ;
- la figure 5 illustre en perspective le dispositif de tri de la figure 1 en position volet orientable ouvert pour la déviation des déchets ;
- la figure 6 est une vue de côté en coupe partielle diamétrale à plus grande échelle dans la zone de périphérie du dispositif de la figure 1 ;
- la figure 7 illustre en perspective un dispositif de tri de déchets selon un second mode de réalisation de l'invention, avec le volet orientable en position fermée ; et
- la figure 8 illustre en perspective le dispositif de la figure 7 avec le volet orientable en position d'ouverture partielle pour déviation des déchets.

### DESCRIPTION DES MODES DE REALISATION PREFERES

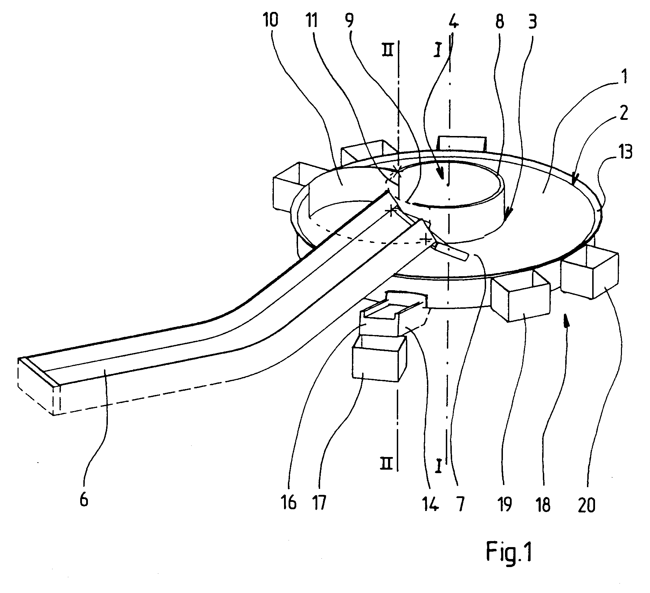

Dans le mode de réalisation illustré sur les figures 1 à 5, le dispositif de tri manuel de déchets selon l'invention comprend un plateau tournant 1, en forme de couronne généralement circulaire et horizontale, limité par un bord extérieur 2 et un bord intérieur 3. Le bord intérieur 3 entoure un espace central 4 dans lequel sont éventuellement logés des moyens de réception et d'évacuation de déchets, qui seront décrits plus loin.

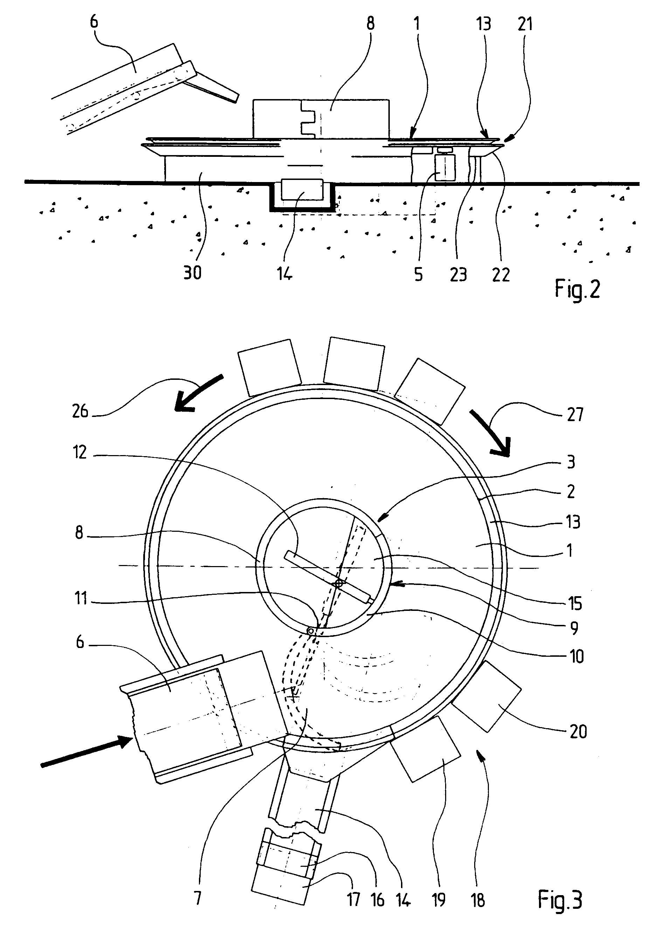

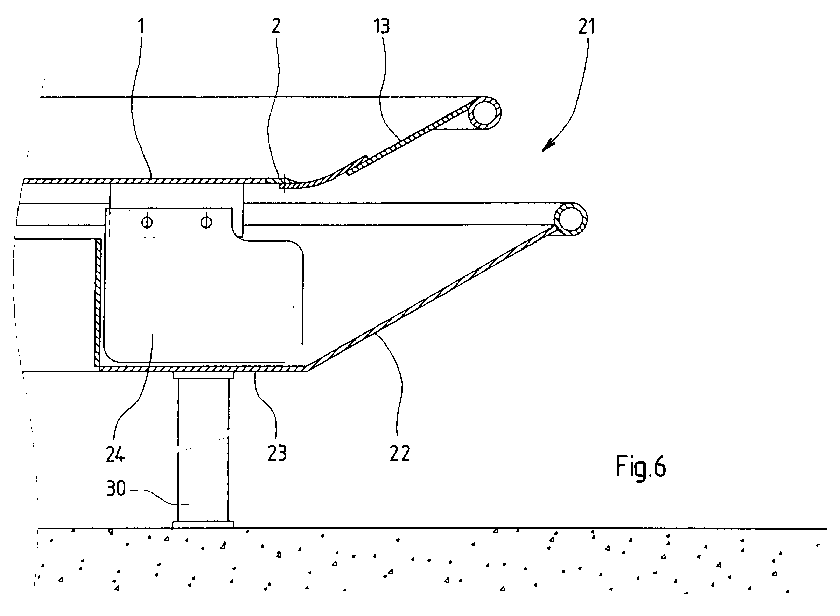

Le plateau tournant 1 est porté par un bâti 30 (figures 2 et 6) et est entraîné en rotation selon un axe vertical I-I coaxial par des moyens moteurs comprenant un moteur 5 et une transmission appropriée, comme illustré sur la figure 2. De préférence, le moteur 5 peut entraîner le plateau tournant 1 dans l'un et l'autre des sens de rotation 26 et 27 représentés sur la figure 3. Le sens de rotation est choisi par un opérateur.

Un tapis de chargement 6 permet d'amener les déchets à trier sur le plateau tournant 1. Le tapis de chargement 6 peut avantageusement être ascendant, pour amener les déchets depuis le sol et les élever au-dessus du niveau du plateau tournant 1 pour les déverser ensuite sur le plateau tournant 1 dans une zone de chargement 7.

Le bord intérieur 3 du plateau tournant 1 est surmonté d'une paroi intérieure 8 généralement cylindrique et coaxiale, qui peut être avantageusement pourvue d'une ouverture 9 obturable par un volet orientable 10.

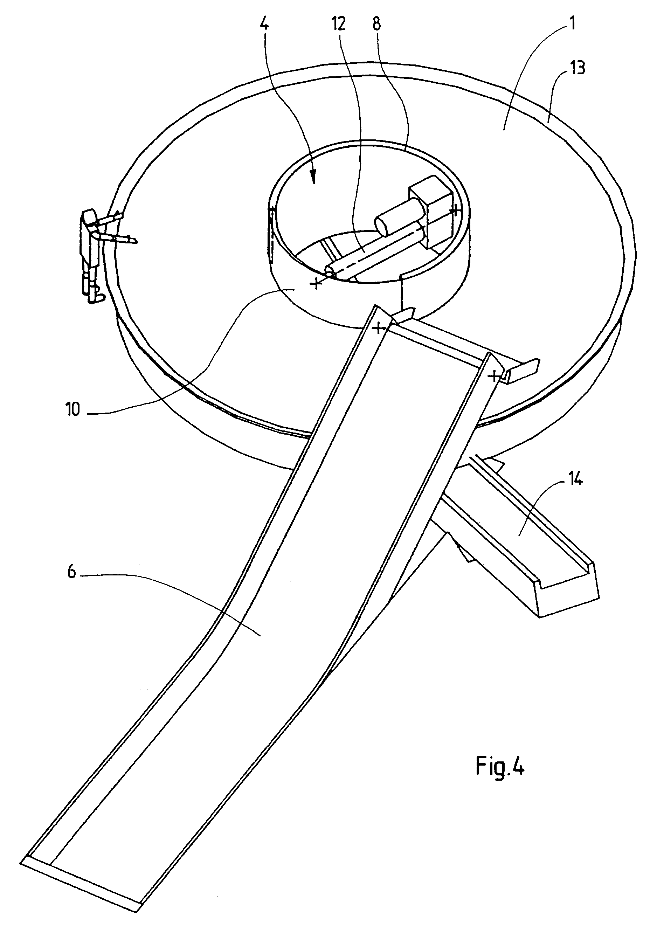

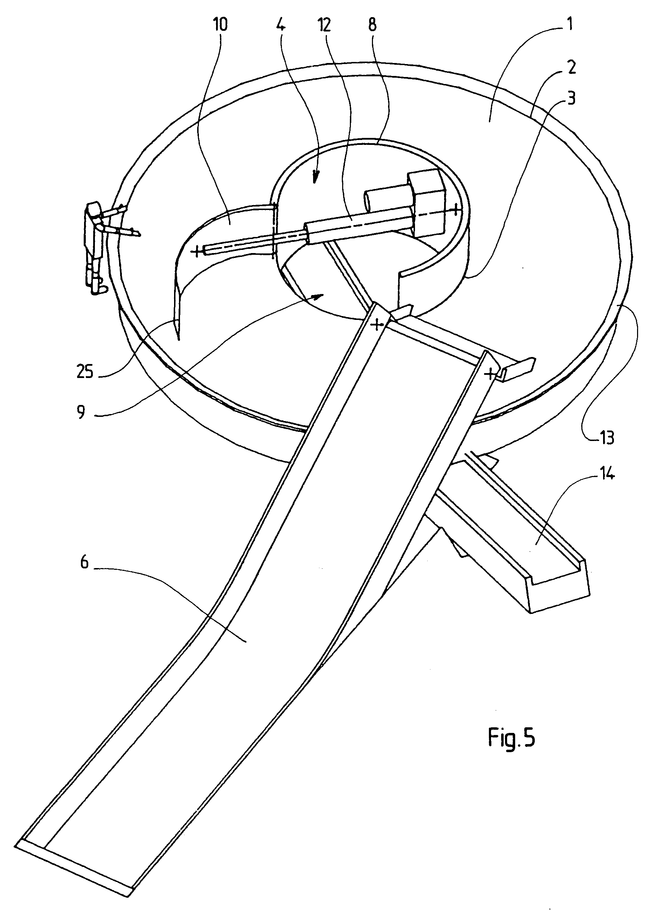

Dans ce mode de réalisation illustré, le volet orientable 10 est incurvé en arc de cylindre, et est articulé autour d'un axe de rotation vertical II-II selon l'un de ses bords verticaux 11. L'axe de rotation vertical II-II est de préférence une génératrice du cylindre formant la paroi intérieure 8, situé ainsi au voisinage du bord intérieur 3 du plateau tournant 1. Le volet 10 est orientable de façon réglable en toutes positions intermédiaires entre une position repliée illustrée sur les figures 3 et 4, dans laquelle il ferme l'ouverture 9 de la paroi intérieure 8, et une position déployée illustrée sur la figure 5 et en pointillés sur la figure 3, dans laquelle il est pivoté au-dessus du plateau tournant 1 à l'écart de l'ouverture 9. Le volet orientable 10 est ainsi placé en une zone fixe au-dessus du plateau tournant 1, et il est adapté pour racler les déchets portés par le plateau tournant 1 et pour les dévier sélectivement soit radialement en direction du bord extérieur 2, soit radialement en direction du bord intérieur 3, selon le sens de rotation du plateau tournant 1.

Des moyens d'actionnement tels qu'un vérin 12, avantageusement disposés dans l'espace central 4, permettent de commander l'orientation du volet orientable 10 de façon réglable en toutes positions intermédiaires entre la position repliée et la position déployée, et de commander ainsi la déviation résultante des déchets portés par le plateau tournant 1.

En position repliée telle qu'illustrée sur les figures 3 ou 4, le volet orientable 10 autorise le chargement complet du plateau tournant 1. En position déployée illustrée sur la figure 5, le volet orientable 10 dévie radialement les déchets reposant sur le plateau tournant 1 lors de la rotation dudit plateau tournant 1.

Le bord extérieur 2 du plateau tournant 1 est avantageusement entouré d'une portion périphérique 13 fixe relevée, tendant à éviter la sortie intempestive des déchets vers la périphérie du plateau tournant 1, et constituant un appui fixe pour le ou les opérateurs. Ainsi, la portion périphérique 13 est solidaire du bâti 30 sur lequel tourne le plateau tournant 1.

Les moyens de réception et d'évacuation des déchets dans l'espace central 4 comprennent par exemple un tapis d'évacuation 14 linéaire, dont une portion 15 passe sous l'espace central 4, et qui conduit les déchets recueillis dans l'espace central 4 jusqu'à une sortie 16 les déversant par exemple dans un bac 17. Dans l'espace central 4, les déchets peuvent avantageusement être guidés par des pans inclinés, non représentés, jusque sur la partie 15 du tapis d'évacuation 14.

En périphérie du plateau tournant 1, on dispose au moins un poste d'opérateur 18. Le poste d'opérateur 18 comprend au moins une structure d'accueil et d'évacuation de déchets sélectionnés, conformée et disposée pour recevoir et évacuer les déchets sélectionnés par l'opérateur. Sur les figures, le poste d'opérateur 18 est associé à deux structures 19 et 20 d'accueil et d'évacuation de déchets sélectionnés. Il peut par exemple s'agir de bacs interchangeables qui sont évacués lorsqu'ils sont pleins.

Les figures illustrent un autre mode de réalisation d'une telle structure d'accueil et d'évacuation de déchets sélectionnes. Cette structure est en particulier mieux représentée sur les figures 2 et 6 : on prévoit alors au moins une ouverture périphérique inférieure 21, ménagée au-dessous de la portion périphérique 13 fixe, et raccordée par une rampe inclinée 22 à des moyens d'évacuation des déchets sélectionnés. Dans le mode de réalisation représenté, la rampe inclinée 22 conduit les déchets sélectionnés à un plateau inférieur 23 fixe coaxial associé à une raclette 24 entraînée par le plateau tournant 1 pour pousser les déchets sélectionnés vers au moins une sortie ménagée dans le plateau inférieur 23 fixe pour leur évacuation.

Le plateau tournant 1 est dimensionné de préférence pour recevoir un volume de déchets correspondant au contenu d'une benne de camion de ramassage d'ordures ou de déchets industriels. Par exemple, on peut avantageusement prévoir un plateau tournant 1 dont le diamètre extérieur est d'environ 8 mètres, avec un espace central 4 dont le diamètre est d'environ 3 mètres. La paroi intérieure 8 peut avantageusement avoir une hauteur de 80 à 100 centimètres. Le volet orientable 10 a avantageusement une dimension telle que, en position ouverte représentée sur la figure 5, son bord libre 25 se trouve au voisinage du bord extérieur 2 du plateau tournant 1.

Le fonctionnement d'un tel dispositif de tri manuel est le suivant. Dans son état initial, le volet orientable 10 est en position fermée comme illustré sur la figure 4. Le plateau tournant 1 est entraîné en rotation dans le sens de tri 26, et le tapis de chargement 6 transporte les déchets à trier et les déverse sur le plateau tournant 1 dans la zone de chargement 7. Les déchets s'entassent sur le plateau tournant 1, jusqu'à une hauteur appropriée, inférieure à la hauteur de la paroi intérieure 8. Le ou les opérateurs disposés autour du plateau tournant 1 peuvent alors commencer l'opération de tri en sélectionnant certains types de déchets dans la zone de déchets accessible proche du bord extérieur 2, et en les déplaçant à la main pour les introduire dans les structures d'accueil et d'évacuation de déchets sélectionnés telles que les bacs 19 ou 20 ou dans l'ouverture 21. Au fur et à mesure du tri, la hauteur des déchets présents sur le plateau tournant 1 tend à décroître. On actionne alors le volet orientable 10, pour l'entrouvrir, alors que le plateau tournant 1 tourne dans le sens de tri illustré par la flèche 26 sur la figure 3. Dans ce sens de rotation, le volet orientable 10 dévie les déchets portés par le plateau tournant 1 en direction du bord extérieur 2, et les rapproche ainsi du ou des opérateurs, qui peuvent alors les atteindre pour poursuivre le tri manuel. L'opération de tri manuel peut se poursuivre, par rotation du plateau tournant 1, jusqu'à ce que la sélection des types de déchets choisis soit terminée.

En fin de tri, par exemple lorsque tous les déchets valorisables ou encombrants ont été sélectionnés et retirés du plateau tournant 1, on procède à l'évacuation des produits restant sur le plateau. Selon une première possibilité, on inverse la rotation du plateau tournant 1, pour l'entraîner en rotation dans le sens de vidage illustré par la flèche 27 sur la figure 3, et on poursuit l'ouverture complète du volet orientable 10 jusqu'en position ouverte telle qu'illustrée sur la figure 5 ou en pointillés sur la figure 3. Dans cette position du volet orientable 10 et dans ce sens de rotation 27 du plateau tournant 1, les déchets non sélectionnés qui sont encore présents sur le plateau tournant 1 sont déviés par le volet orientable 10 en direction du bord intérieur 3, et ils traversent l'ouverture 9 de la paroi intérieure 8 pour pénétrer dans l'espace central 4 dans lequel ils se déversent sur le tapis d'évacuation 14.

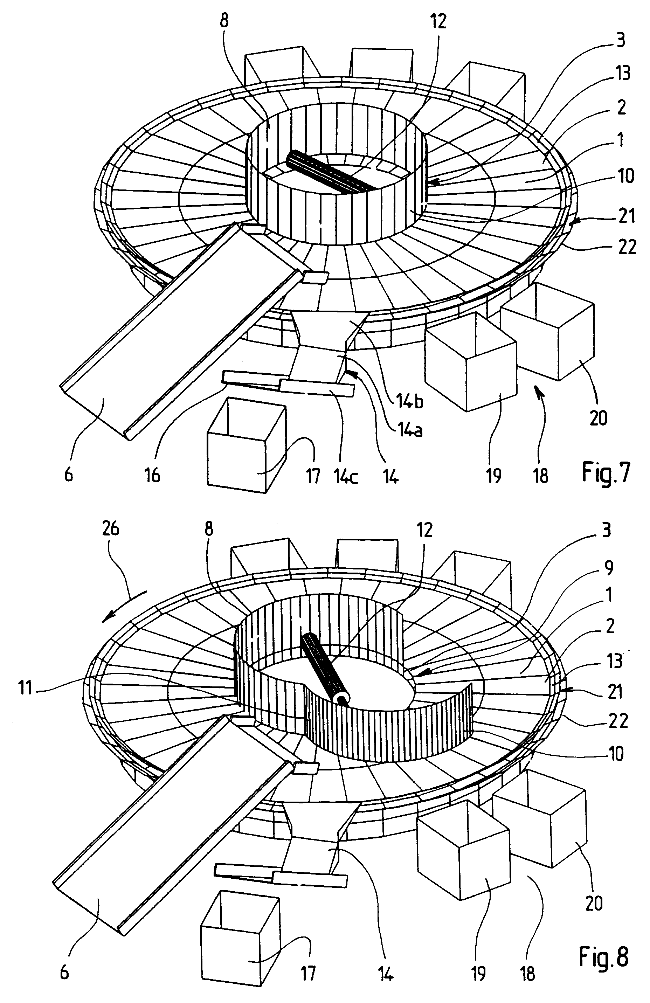

Dans un second mode de réalisation illustré sur les figures 7 et 8, le dispositif selon l'invention reprend les principaux moyens du mode de réalisation des figures 1 à 6, et les moyens qui sont repris sont repérés par les mêmes références numériques.

On retrouve en particulier le plateau tournant 1, limité par un bord extérieur 2 et par un bord intérieur 3, avec une paroi intérieure 8 généralement cylindrique dont une partie comporte une ouverture 9 obturée par un volet orientable 10 pivotant autour de son bord vertical 11. Le vérin 12 permet d'orienter le volet orientable 10 entre une position fermée, représentée sur la figure 7, une position d'ouverture partielle représentée sur la figure 8, et une position d'ouverture totale similaire de celle représentée en pointillés sur la figure 3.

Dans ce mode de réalisation des figures 7 et 8, les moyens de réception et d'évacuation de déchets 14 sont disposés en périphérie du plateau tournant 1, et comprennent par exemple une goulotte descendante 14a communiquant avec le bord extérieur 2 du plateau tournant 1 par une ouverture 14b prévue dans la portion périphérique 13 fixe relevée, et conduisant les déchets à un tapis de relevage 14c qui les déverse par son extrémité de sortie 16 dans le bac 17.

Le volet orientable 10 est adapté pour permettre sélectivement de déverser les déchets dans les moyens de réception et d'évacuation de déchets 14 placés en périphérie.

Lors de l'ouverture totale du volet orientable 10, le plateau tournant 1 étant entraîné en rotation dans le sens de tri 26 illustré sur la figure 8, le volet orientable 10 dévie les déchets et les déverse en périphérie dans les moyens de réception et d'évacuation de déchets 14.

Dans ce mode de réalisation, les moyens de réception et d'évacuation de déchets 14 peuvent avantageusement être disposés sous le tapis de chargement 6, de façon à diminuer l'espace occupé autour du plateau tournant 1, réservant ainsi le maximum d'espace pour les opérateurs effectuant le tri.

On notera que, dans ce mode de réalisation, le plateau tournant 1 peut être entraîné dans un seul sens de rotation 26, puisque la seule variation d'orientation du volet orientable 10 permet d'assurer les deux fonctions de déplacement radial et progressif des déchets pendant le tri, et de déversement des déchets dans les moyens de réception et d'évacuation de déchets 14.

Egalement, dans le cadre de l'invention et selon une variante de ce mode de réalisation des figures 7 et 8, l'espace central 4 peut être très réduit ou même annulé, si l'on prévoit simultanément d'autres moyens pour soutenir et déplacer le volet orientable 10. Le volet orientable 10 peut alors, par exemple, être porté par un montant central ou par une potence le reliant au bâti 30, et il peut être déplaçaole en translation verticale et en pivotement d'axe vertical.

Dans tous les modes de réalisation qui ont été décrits, on peut en outre prévoir un entraînement à vitesse variable du plateau tournant 1, la vitesse pouvant être sélectionnée en fonction des étapes de tri, en fonction du nombre d'opérateurs, et en fonction du type de déchets à sélectionner.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour le tri manuel de déchets, comprenant au moins un poste d'opérateur (18) disposé en périphérie d'un système de présentation en boucle fermée, avec des moyens (6) pour amener les déchets à trier sur le système de présentation, le système de présentation étant un plateau tournant (1) en forme de couronne généralement circulaire et horizontale, limité par un bord extérieur (2) et par un bord intérieur (3), et entraîné en rotation selon un axe vertical (I-I) coaxial par des moyens moteurs (5), dans lequel :
- le bord intérieur (3) entoure un espace central (4),
- des moyens de réception et d'évacuation de déchets (14) sont disposés au voisinage de l'un au moins des bords intérieur (3) ou extérieur (2),
- le poste d'opérateur (18) comprend au moins une structure d'accueil et d'évacuation de déchets sélectionnés (19, 20, 21) conformée et disposée pour recevoir et évacuer les déchets sélectionnés par l'opérateur occupant le poste d'opérateur (18),
caractérisé en ce que :
- des moyens pousseurs réglables (10) permettent de repousser radialement à volonté et de façon réglable les déchets sur le plateau tournant (1) au moins en direction du bord extérieur (2), pour les rapprocher à volonté du bord extérieur (2) et les rendre accessibles par l'opérateur occupant le poste d'opérateur (18),
- les moyens pousseurs réglables (10) permettent de repousser radialement et progressivement à volonté les déchets sur le plateau tournant (1) jusqu'à l'un au moins des bords intérieur (3) ou extérieur (2), et de les déverser dans les moyens de réception et d'évacuation de déchets (14).

2. Dispositif selon la revendication 1, caractérisé en ce que les moyens pousseurs réglables (10) comprennent au moins un premier volet orientable (10), placé en une zone fixe au-dessus du plateau tournant (1), et adapté pour racler les déchets portés par le plateau tournant (1) et pour les dévier radialement au moins en direction du bord extérieur (2), avec des moyens d'actionnement (12) du premier volet orientable (10) pour commander son orientation et la déviation des déchets qui en résulte.

3. Dispositif selon la revendication 2, caractérisé en ce que :
- des moyens de réception et d'évacuation de déchets (14) sont disposés en périphérie du plateau tournant (1),
- le premier volet orientable (10) est adapté pour permettre sélectivement de déverser les déchets dans lesdits moyens de réception et d'évacuation de déchets (14).

4. Dispositif selon l'une quelconque des revendications 1 à 3, caractérisé en ce que les moyens pousseurs réglables (10) comprennent au moins un second volet orientable (10), placé en une zone fixe au-dessus du plateau tournant (1), et adapté pour racler les déchets portés par le plateau tournant (1) et pour les dévier radialement jusqu'au bord intérieur (3), avec des moyens d' actionnement (12) du second volet orientable (10) pour commander son orientation et la déviation des déchets qui en résulte, le second volet orientable (10) étant adapté pour permettre sélectivement de déverser les déchets dans des moyens de réception et d'évacuation de déchets (14) logés dans l'espace central (4).

5. Dispositif selon la revendication 4, caractérisé en ce que le premier volet et le second volet sont un seul et même volet orientable (10).

6. Dispositif selon l'une des revendications 3 ou 5, caractérisé en ce que le bord intérieur (3) est surmonté d'une paroi intérieure (8) généralement cylindrique coaxiale pourvue d'une ouverture (9) obturable par le volet orientable (10) lui-même articulé autour d'un axe de rotation vertical (II-II) selon l'un de ses bords verticaux (11), le volet (10) étant orientable de façon réglable en toutes positions intermédiaires entre une position repliée dans laquelle il ferme l'ouverture (9) de la paroi intérieure (8) pour empêcher la progression des déchets vers l'espace central (4), et une position déployée dans laquelle il dévie radialement les déchets reposant sur le plateau tournant (1).

7. Dispositif selon la revendication 6, caractérisé en ce que :
- le volet orientable (10) est incurvé en arc de cylindre,
- les moyens moteurs (5) sont adaptés pour entraîner sélectivement le plateau tournant (1) dans l'un et l'autre des sens de rotation (26, 27),
de sorte que, lorsque le volet orientable (10) est en position déployée, la rotation du plateau tournant (1) dans un premier sens (26) provoque la déviation des déchets vers le bord extérieur (2) pour les rapprocher du poste d'opérateur (18), et la rotation du plateau tournant (1) dans le sens opposé (27) provoque la déviation des déchets vers l'ouverture (9) de la paroi intérieure (8) et leur progression jusque dans l'espace central (4) pour leur évacuation.

8. Dispositif selon l'une quelconque des revendications 1 à 7, caractérisé en ce que le bord extérieur (2) du plateau tournant (1) est entouré d'une portion périphérique (13) fixe relevée, tendant à éviter la sortie intempestive des déchets vers la périphérie du plateau tournant (1), et constituant un appui fixe pour l'opérateur.

9. Dispositif selon l'une quelconque des revendications 1 à 8, caractérisé en ce que la structure d'accueil et d'évacuation des déchets sélectionnés comprend au moins une ouverture périphérique inférieure (21) raccordée par une rampe inclinée (22) à des moyens d'évacuation des déchets sélectionnés.

10. Dispositif selon la revendication 9, caractérisé en ce que la rampe inclinée (22) conduit les déchets sélectionnés à un plateau inférieur (23) fixe coaxial associé à une raclette (24) entraînée par le plateau tournant (1) pour pousser les déchets sélectionnés vers au moins une sortie ménagée dans le plateau inférieur (23) fixe pour leur évacuation.

11. Procédé de tri de déchets, dans lequel les déchets sont amenés sur un système de présentation en boucle fermée (1) pour passer à proximité d'au moins un poste d'opérateur (18) occupé par un opérateur effectuant un tri manuel, le système de présentation étant un plateau tournant (1) en forme de couronne généralement circulaire et horizontale, caractérisé en ce que :
- lors d'une étape initiale de tri, les déchets présents sur le plateau tournant (1) sont progressivement repoussés vers la périphérie (2) pour les rapprocher de l'opérateur qui retire du plateau tournant (1) les déchets sélectionnés,
- lors d'une étape finale, les déchets non sélectionnés sont repoussés soit vers le centre (3), soit vers la périphérie (2) du plateau tournant (1) pour se déverser dans des moyens de réception et d'évacuation de déchets (14).

## Claims

1. A device for the manual sorting of waste, comprising at least one operating station (18) disposed at the periphery of a closed loop presentation system, with means (6) for directing the waste to be sorted on to the presentation system, the presentation system being a generally circular and horizontal ring-shaped turntable (1) bounded by an outer rim (2) and by an inner rim (3) and driven in rotating motion about a coaxial vertical axis (I-I) by drive means (5), wherein:
- the inner rim (3) surrounds a central space (4),
- waste receiving and discharge means (14) are disposed in the vicinity of at least one of the inner (3) or outer rims (2),
- the operating station (18) comprises at least one admission and discharge structure (19,20,21) for selected waste adapted and arranged to receive and discharge the waste selected by the operator occupying the operating station (18),
characterised in that:
- adjustable pusher means (10) enable the waste to be pushed back as desired and adjustably on the turntable (1) at least in the direction of the outer rim (2) so as to bring the waste as desired nearer to the outer rim (2) and make said waste accessible to the operator occupying the operating station (18),
- the adjustable pusher means (10) make it possible to push the waste radially and gradually as desired on the turntable (1) up to at least one of the inner (3) or outer rims (2), and to divert said waste into the waste receiving and discharge means (14).

2. A device according to claim 1, characterised in that the adjustable pusher means (10) comprise at least one first adjustable flap (10) disposed in a fixed zone above the turntable (1) and adapted to scrape the waste carried by the turntable (1) and to deviate the waste radially at least in the direction of the outer rim (2), with actuating means (12) for the first adjustable flap (10) to control its orientation and the resultant deviation of the waste.

3. A device according to claim 2, characterised in that:
- waste receiving and discharge means (14) are disposed at the periphery of the turntable (1),
- the first adjustable flap (10) is adapted to make it possible selectively to divert the waste into said waste receiving and discharge means (14).

4. A device according to any one of claims 1 to 3, characterised in that the adjustable pusher means (10) comprise at least one second adjustable flap (10) disposed in a fixed zone above the turntable (1) and adapted to scrape the waste carried by the turntable (1) and to deviate the waste radially up to the inner rim (3), with actuating means (12) for the second adjustable flap (10) to control its orientation and the resultant deviation of the waste, the second adjustable flap (10) being adapted to make it possible selectively to divert the waste into waste receiving and discharge means (14) accommodated in the central space (4).

5. A device according to claim 4, characterised in that the first flap and the second flap are the same adjustable flap (10).

6. A device according to either claim 3 or claim 5, characterised in that the inner rim (3) is surmounted by a generally cylindrical coaxial inner wall (8) provided with an opening (9) which can be closed by the adjustable flap (10) which is itself pivoted about a vertical axis of rotation (II-II) along one of its vertical edges (11), the flap (10) being adjustable in a controllable manner in all intermediate positions between a folded position in which it closes the opening (9) in the inner wall (8) to prevent the advance of the waste towards the central space (4), and an extended position in which it deviates radially the waste deposited on the turntable (1).

7. A device according to claim 6, characterised in that
- the adjustable flap (10) is curved in a cylindrical arc,
- the drive means (5) are adapted to drive selectively the turntable (1) in one or other of the directions of rotation (26,27),
so that when the adjustable flap (10) is in the extended position the rotation of the turntable (1) in a first direction (26) causes the waste to be deviated towards the outer rim (2) so as to bring the waste towards the operating station (18), and the rotation of the turntable (1) in the opposite direction (27) causes the waste to be deviated towards the opening (9) in the inner wall (8) and its advance into the central space (4) for the discharge thereof.

8. A device according to any one of claims 1 to 7, characterised in that the outer rim (2) of the turntable (1) is surrounded by a fixed raised peripheral portion (13) tending to avoid the undesirable outlet of the waste towards the periphery of the turntable (1) and forming a fixed support for the operator.

9. A device according to any one of claims 1 to 8, characterised in that the admission and discharge structure for selected waste comprises at least one lower peripheral opening (21) connected by an inclined ramp (22) to discharge means for selected waste.

10. A device according to claim 9, characterised in that the inclined ramp (22) conveys the selected waste to a fixed coaxial lower plate (23) associated with a scraper (24) driven by the turntable (1) so as to push the selected waste towards at least one outlet provided in the fixed lower plate (23) for the discharge thereof.

11. A method of sorting waste, in which the waste is directed to a closed loop presentation system (1) so as to pass in the vicinity of at least one operating station (18) occupied by an operator performing manual sorting, the presentation system being a generally circular and horizontal ring-shaped turntable (1), characterised in that
- during an initial sorting stage the waste present on the turntable (1) is gradually pushed towards the periphery (2) so as to bring it nearer to the operator who takes the selected waste from the turntable (1),
- during a final stage the unselected waste is pushed either towards the centre (3) or towards the periphery (2) of the turntable (1) so as to be diverted into waste receiving and discharge means (14).

## Patentansprüche

1. Vorrichtung zum manuellen Sortieren von Abfällen, bestehend aus mindestens einer Arbeitsstation (18), die am Umfang eines Zubringsystems in geschlossenem Kreis angeordnet ist, mit Einrichtungen (6) zum Zuführen der zu sortierenden Abfälle auf das Zubringsystem, wobei das Zubringsystem eine Drehscheibe (1) in Form eines allgemein kreisförmigen, horizontalen Kranzes ist, der durch einen Außenrand (2) und einen Innenrand (3) begrenzt wird und durch Antriebseinrichtungen (5) um eine koaxiale, vertikale Achse (I-I) in Drehung versetzt wird, in welcher
- der Innenrand (3) einen zentralen Raum (4) umgibt,
- Einrichtungen (14) zum Aufnehmen und Abführen der Abfälle in Nähe mindestens eines der Ränder, Innenrand (3) oder Außenrand (2), angeordnet sind und
- die Arbeitsstation (18) mindestens eine Struktur (19, 20, 21) zum Annehmen und Abführen von aussortierten Abfällen aufweist, die so ausgebildet und angeordnet ist, daß sie die Abfälle, die von der in der Arbeitsstation (18) eingesetzten Bedienungsperson aussortiert wurden, aufnehmen und abführen kann,
dadurch gekennzeichnet, daß
- verstellbare Schubeinrichtungen (10) es gestatten, die Abfälle auf der Drehscheibe (1) radial mindestens in Richtung auf den Außenrand (2) nach Wunsch und regelbar zurückzuschieben, um sie nach Wunsch dem Außenrand (2) zu nähern und sie für die in der Arbeitsstation (18) eingesetzten Bedienungsperson zugänglich zu machen, und
- die verstellbaren Schubeinrichtungen (10) es gestatten, die Abfälle auf der Drehscheibe (1) nach Wunsch radial und progressiv bis zu mindestens einem der Ränder, Innenrand (3) oder Außenrand (2), zu schieben und sie in die Einrichtungen (14) zum Aufnehmen und Abführen der Abfälle zu schütten.

2. Vorrichtung nach Anspruch 1, dadurch gekennzeichnet, daß die verstellbaren Schubeinrichtungen (10) mindestens einen ersten verschwenkbaren Flügel (10) aufweisen, der in einer feststehenden Zone über der Drehscheibe (1) angeordnet ist und dafür ausgelegt ist, die auf der Drehscheibe (1) liegenden Abfälle abzustreifen und sie radial mindestens in Richtung auf den äußeren Rand (2) abzulenken, sowie eine Einrichtung (12) zur Betätigung des ersten verschwenkbaren Flügels (10) zum Steuern seiner Verschwenkung und der dadurch bewirkten Ablenkung der Abfälle.

3. Vorrichtung nach Anspruch 2, dadurch gekennzeichnet, daß
- Einrichtungen (14) zum Aufnehmen und Abführen von Abfällen am Umfang der Drehscheibe (1) angeordnet sind,
- der erste verschwenkbare Flügel (10) dafür ausgelegt ist, eine selektive Ausschüttung der Abfälle in die Einrichtungen (14) zum Aufnehmen und Abführen von Abfällen zu gestatten.

4. Vorrichtung nach einem der Ansprüche 1 bis 3, dadurch gekennzeichnet, daß die verstellbaren Schubeinrichtungen (10) mindestens einen zweiten verschwenkbaren Flügel (10) aufweisen, der in einer feststehenden Zone über der Drehscheibe (1) angeordnet ist und dafür ausgelegt ist, die auf der Drehscheibe (1) liegenden Abfälle abzustreifen und sie radial bis zum Innenrand (3) abzulenken, sowie Einrichtungen (12) zur Betätigung des zweiten verschwenkbaren Flügels (10) zum Steuern seiner Verschwenkung und der dadurch bewirkten Ablenkung der Abfälle, wobei der zweite verschwenkbare Flügel (10) dafür ausgelegt ist, eine selektive Ausschüttung der Abfälle in im zentralen Raum (4) angeordnete Einrichtungen (14) zum Aufnehmen und Abführen der Abfälle zu gestatten.

5. Vorrichtung nach Anspruch 4, dadurch gekennzeichnet, daß der erste Flügel und der zweite Flügel ein und derselbe verschwenkbare Flügel (10) sind.

6. Vorrichtung nach einem der Ansprüche 3 oder 5, dadurch gekennzeichnet, daR über dem Innenrand (3) eine allgemein zylindrische, koaxiale Innenwand (8) vorgesehen ist, die mit einer Öffnung (9) versehen ist, die durch den verschwenkbaren Flügel (10) verschließbar ist, der seinerseits an einem seiner vertikalen Ränder (11) über eine vertikale Drehachse (II-II) angelenkt ist und der regelbar in alle Zwischenstellungen verschwenkbar ist, und zwar zwischen einer eingeklappten Stellung, in der er die Öffnung (9) der Innenwand (8) verschließt, um das Austreten der Abfälle in den zentralen Raum (4) zu verhindern, und einer ausgeklappten Stellung, in der er die auf der Drehscheibe (1) liegenden Abfälle radial ablenkt.

7. Vorrichtung nach Anspruch 6, dadurch gekennzeichnet, daß
- der verschwenkbare Flügel (10) in Form eines Zylinderbogens gekrümmt ist,
- die Antriebseinrichtungen (5) dafür ausgelegt sind, die Drehscheibe (1) wahlweise in der einen und in der anderen Drehrichtung (26, 27) anzutreiben,
so daß die Drehung der Drehscheibe (1) in einer ersten Richtung (26) bei ausgeklapptem verschwenkbaren Flügel (10) die Ablenkung der Abfälle auf den Außenrand (2) zu bewirkt, um sie der Arbeitsstation (18) zu nähern, und die Drehung der Drehscheibe (1) in der entgegengesetzten Richtung die Ablenkung der Abfälle auf die Öffnung (9) der Innenwand (8) zu und ihr Eintreten in den zentralen Raum (4) für ihre Abfuhr bewirkt.

8. Vorrichtung nach einem der Ansprüche 1 bis 7, dadurch gekennzeichnet, daR der Außenrand (2) der Drehscheibe (1) von einem erhöhten feststehenden Umfangsteil (13) umgeben ist, der dem ungewollten Austreten der Abfälle auf den Umfang der Drehscheibe (1) zu entgegenwirkt und eine feststehende Auflage für die Bedienungsperson bildet.

9. Vorrichtung nach einem der Ansprüche 1 bis 8, dadurch gekennzeichnet, daß die Struktur zum Aufnehmen und Abführen der aussortierten Abfälle mindestens eine untere Umfangsöffnung (21) aufweist, die durch eine schräge Rampe (22) an Einrichtungen zur Abfuhr der aussortierten Abfälle angeschlossen ist.

10. Vorrichtung nach Anspruch 9, dadurch gekennzeichnet, daß die schräge Rampe (22) die aussortierten Abfälle zu einer koaxialen, feststehenden unteren Scheibe (23) leitet, der ein Räumer (24) zugeordnet ist, der durch die Drehscheibe (1) mitgenommen wird, um die aussortierten Abfälle für ihre Abführung auf mindestens einen in der feststehenden unteren Scheibe (23) vorgesehenen Ausgang zu zu schieben.

11. Verfahren zum Sortieren von Abfällen, bei dem die Abfälle auf einem Zubringsystem (1) in einem geschlossenen Kreis zugeführt werden, um in Nähe mindestens einer Arbeitsstation (18) vorbeizulaufen, die mit einer eine manuelle Sortierung vornehmenden Bedienungsperson besetzt ist, wobei das Zubringsystem eine Drehscheibe (1) in Form eines allgemein kreisförmigen und horizontalen Kranzes ist, dadurch gekennzeichnet, daß
- in der Anfangsphase der Sortierung die auf der Drehscheibe (1) befindlichen Abfälle allmählich auf den Umfang (2) zu geschoben werden, um sie der Bedienungsperson zu nähern, die die aussortierten Abfälle von der Drehscheibe (1) nimmt, und
- in der Endphase die nicht aussortierten Abfälle entweder auf die Mitte (3) oder auf den Umfang (2) der Drehscheibe (1) zu geschoben werden, um in Einrichtungen (14) zum Aufnehmen und Abführen von Abfällen geschüttet zu werden.
